# EUROPÄISCHE PATENTSCHRIFT

(11) **EP 2 106 972 B1**
(45) Veröffentlichungstag und Bekanntmachung des Hinweises auf die Patenterteilung: **15.09.2010**
(21) Anmeldenummer: 09156978.0
(22) Anmeldetag: 31.03.2009
(51) Int. Cl.: B60R 3/02, B61D 23/02

(54) **Zustiegshilfe mit verbessertem Spindelantrieb**
Climbing aid with improved spindle drive
Aide à la montée dotée d'un entraînement à broche amélioré

(30) Priorität: 01.04.2008 DE 202008004517 U
(43) Veröffentlichungstag der Anmeldung: 07.10.2009
(73) Patentinhaber: Gebr. Bode GmbH & Co. KG, 34123 Kassel (DE)
(72) Erfinder: Böde, Ralf, 34590 Wabern (DE); Grimm, Holger, 36280 Oberaula (DE)
(74) Vertreter: Bauer Vorberg Kayser Patentanwälte

(56) Entgegenhaltungen:
- EP-A- 0 509 362
- DE-U1-202005 012 584
- DE-U1-202006 017 716
- DE-U1-202007 000 912
- GB-A- 745 918
- US-A- 5 775 232
- US-B1- 6 848 735

## Beschreibung

Die vorliegende Erfindung betrifft eine Zustiegshilfe für ein Personenbeförderungsfahrzeug mit einer Antriebsvorrichtung zur Bewegung einer Trittplatte der Zustiegshilfe mittels eines Drehantriebs, wobei die Antriebsvorrichtung wenigstens einen Spindelmechanismus aufweist. Beispielsweise handelt sich bei dem Fahrzeug zur Personenbeförderung um ein schienengebundenes Fahrzeug oder ein Kraftfahrzeug.

Zustiegshilfen für Personenbeförderungssysteme sind bekannt. Beispielsweise handelt es sich dabei um eine Rampe oder einen Schiebetritt mit zugehöriger Verstellantriebsvorrichtung für einen Türeinstieg eines Personenbeförderungsfahrzeuges, wobei die jeweilige Trittplatte zwischen einer eingefahrenen Stellung und einer ausgefahrenen Stellung bewegbar ist, um den Zustieg der Insassen zu erleichtern. Derartige Zustiegshilfen werden bei Fahrzeugen zur Personenbeförderung, beispielsweise bei Bussen oder Schienenfahrzeugen des öffentlichen Nahverkehrs, eingesetzt. Sie sind in vielfältigen Bauformen bekannt und erleichtern allgemein den Ein- und Ausstieg dadurch, dass im Bereich von Haltestellen an den Fahrzeugen die verschiebbar und/oder verschwenkbar gelagerte Trittplatte ausgefahren wird. Sie dienen dabei der Überbrückung von Spalten (beispielsweise bei Bahnsteigen) oder werden auch zum Höhenausgleich eingesetzt. Schließlich erleichtern oder ermöglichen sie Rollstuhlfahrern den Zugang in die Fahrzeuge. Nach Beendigung der Aus- und Einstiegsphase und eventuell nach dem Schließen der Fahrzeugtüren wird die Trittplatte wieder in ihre Ruhestellung zurückgebracht. Motorisch betriebene Schiebetritte sind beispielsweise in den Druckschriften US 6 848 735, DE 20 2007 000 912 U1, DE 20 2005 012 584 U1 und DE 20 2006 017 716 U1 beschrieben.

Es ist ferner bekannt, dass eine Zustiegshilfe einen oder mehrere Spindelmechanismen aufweist. Ein Spindelmechanismus umfasst eine Spindel und eine auf deren Gewinde ablaufende Spindelmutter. Derartige Spindelmechanismen sind vorgesehen, um eine Drehbewegung in die Verschiebebewegung der Trittplatte umzuwandeln und um diese ein- und auszufahren. Bei den bekannten Systemen wird eine Spindel rotierend angetrieben, auf deren Gewinde eine Spindelmutter abläuft, die mit der Trittplatte verbunden ist. Der Spindelmechanismus wird in der Regel auf den erforderlichen Stellweg vor dem Einbau justiert. Dazu ist eine Klemmverbindung zwischen Spindel und der sie antreibenden Antriebswelle oder einer Zahnriemenscheibe, falls der Antrieb über Zahnriemen erfolgt, vorgesehen. Da die Zugänglichkeit dieser Verbindung in der jeweiligen Einbauumgebung sehr eingeschränkt ist, kann eine nachträgliche Justierung, wenn überhaupt, nur schwer vorgenommen werden. Zudem stellt sich das Problem, dass die Klemmverbindung, da sie sich in der Nähe der Antriebvorrichtung befindet, schnell Schmiermitteln, wie Öl oder Fett, ausgesetzt ist und somit verstärkt die Gefahr besteht, dass dies zu einem Lösen der Verbindung führt.

Eine Justage des Spindelmechanismus nicht nur beim Einbau sondern möglicherweise als Nachjustage im laufenden Betrieb kann insbesondere dann erforderlich sein, wenn die Verschiebung durch zwei synchron rotierende Spindeln vorgenommen wird, wie es beispielsweise bei bekannten Rampen oder Schiebetritten der Fall ist, an deren Flanken sich jeweils ein Spindelmechanismus befindet. Um für ein gleichmäßiges Verschieben der Rampe oder des Schiebetritts zu sorgen, ist der Verstellweg der beiden Spindelmuttern genau aufeinander abzustimmen, damit ein Verkanten des Schiebetritts oder der Rampe verhindert wird. Andernfalls kann es zu erhöhtem Verschleiß kommen oder gar ein Blockieren auftreten. Bei einer symmetrischen Auslegung der beiden Spindelantriebe kommt es beispielsweise auf eine genaue Anordnung der beiden Spindelmutter an jeweils gleicher Stelle der Spindel an, um die zuvor genannten Probleme zu vermeiden.

Der Erfindung liegt daher die Aufgabe zugrunde, eine Zustiegshilfe mit wenigstens einem Spindelmechanismus in der zugehörigen Antriebsvorrichtung bereitzustellen, wobei der Spindelmechanismus leichter zu justieren ist und zuverlässiger ist. Diese Aufgabe wird durch das Einstiegssystem gemäß Anspruch 1 gelöst. Vorteilhafte Ausgestaltungen sind Gegenstand der abhängigen Ansprüche.

Die Erfindung betrifft eine Zustiegshilfe für ein Personenbeförderungsfahrzeug mit einer Antriebsvorrichtung zur Bewegung einer Trittplatte der Zustiegshilfe mittels eines Drehantriebs. Beispielsweise handelt es sich um einen elektromotorischen Drehantrieb. Der Begriff Trittplatte ist weit auszulegen. Beispielsweise handelt es sich um eine Schiebtritt oder eine Rampe, um den Ein- und Ausstieg für Personen oder insbesondere Rollstuhlfahrer in beziehungsweise aus dem Personenbeförderungsfahrzeug zu erleichtern. Dazu wird die Trittplatte im Allgemeinen zwischen einer eingefahrenen Stellung und einer ausgefahrenen Stellung bewegt, um in der ausgefahrenen Stellung den Ein- und Ausstieg durch die ausgefahrene Trittplatte zu erleichtern. Trittplatten werden dabei zur Überbrückung von Spalten (beispielsweise bei Bahnsteigen) oder auch zum Höhenausgleich eingesetzt. Schließlich erleichtern oder ermöglichen sie beispielsweise Rollstuhlfahrern den Zugang in die Fahrzeuge. Nach Beendigung der Aus- und Einstiegsphase und eventuell nach dem Schließen der Fahrzeugtüren wird die Trittplatte wieder in ihre eingefahrene Stellung motorisch zurückgebracht.

Die erfindungsgemäße Antriebsvorrichtung umfasst wenigstens einen Spindelmechanismus. Dieser Spindelmechanismus dient der exakten und doch schnellen Umwandlung der Drehbewegung des Drehantriebs in eine im Wesentlichen translatorische Bewegung der Trittplatte. Der Spindelmechanismus umfasst eine Spindel mit Gewindegang und eine zugehörige Spindelmutter, d.h. eine auf dem Gewinde ablaufende Mutter.

Der erfindungsgemäße Antriebsmechanismus zeichnet sich dadurch aus, dass der Antriebsmechanismus ferner eine arretierbare Kupplung umfasst, die in einer Justierstellung zur Justierung der Trittplatte lösbar ist. Erfindungsgemäß ist die Kupplung zwischen Trittplatte und Spindelmechanismus angeordnet. Justierung der Trittplatte meint, dass durch Lösen der Kupplung die Lage der Trittplatte und damit ihres Verschiebewegs bezüglich des Spindelmechanismus und damit des Fahrzeugs geändert werden kann. Durch Anbringen dieser Kupplung zwischen Trittplatte und Spindelmechanismus, d.h. also in unmittelbarer Nähe der Trittplatte, ist diese Kupplung für die Justierung der Verschiebebewegung der Trittplatte leicht zugänglich. Je nach Ausgestaltung des Spindelmechanismus, d.h. je nach dem welche Komponente aus Spindel oder Spindelmutter des Spindelmechanismus vom Drehantrieb in Drehung versetzt wird, kann die Kupplung zwischen Trittplatte und Spindelmutter oder zwischen Trittplatte und Spindel vorgesehen sein. Durch die Trittbrett-nahe Anordnung ist sie weit weniger Schmiermitteln ausgesetzt, wie es in der Regel in der Nähe des Drehantriebs austritt. Die drehfeste Arretierung der Kupplung kann auf diverse dem Fachmann bekannte Arten erfolgen.

Bevorzugt wird die drehfeste Arretierung durch eine kraftschlüssige Klemmung oder eine formschlüssige Verbindung, beispielsweise wechselseitige Verzahnung, bewirkt. Dadurch kann vergleichsweise einfach und sicher die Arretierung realisiert werden.

Bevorzugt umfasst der Antriebsmechanismus zwei Spindelmechanismen zur Bewegung der Trittplatte, wobei wenigstens eine Kupplung vorgesehen ist. Mittels der Kupplung kann eine Justierung des Verstellweges des zugehörigen Spindelmechanismus auf den Verstellweg des zweiten Spindelmechanismus vorgenommen werden. Dadurch kann auf einfache Weise die Lage der Trittplatte so justiert werden, dass ihre seitlichen Flanken, die zumeist durch die Spindelmechanismen geführt sind, parallel zu den Spindeln verlaufen. Ein Verkanten mit erhöhtem Verschleiß und der Gefahr des Blockierens kann so vermieden werden. Bei einer symmetrischen Auslegung der beiden Spindelantriebe kann so eine genau symmetrische Anordnung der beiden Spindelmuttern auf der jeweiligen Spindel erreicht werden, um oben genannten Probleme zu vermeiden.

Bevorzugt ist die Spindelmutter des Spindelmechanismus mittels der Kupplung gegenüber der Trittplatte festlegbar. Anders ausgedrückt, die Spindelmutter des Spindelmechanismus ist durch die Kupplung mit dem Trittbrett verbunden, während die Verstellung des Trittbretts durch die Drehung der Spindel bewirkt wird. In der Praxis hat sich die Befestigung der Spindelmutter am Trittbrett als sehr zuverlässig erwiesen.

In einer bevorzugten Ausführungsform ist in der Justierstellung der Kupplung die Spindelmutter oder die Spindel (je nach Ausgestaltung des Spindelmechanismus) gegenüber der Trittplatte wenigstens in einem vorgegebenen Drehbereich zur Justage verdrehbar. Durch das Verdrehen kann die Verstellung schnell, präzise und ohne Zuhilfenahme spezieller Werkzeuge erfolgen.

In einer bevorzugten Ausführungsform ist zur Bereitstellung einer Grobeinstellung wenigstens ein Teil der Kupplung gegenüber der Spindelmutter oder der Spindel in definierten Stellungen festlegbar. Dadurch kann die Montage und insbesondere die Justierung beschleunigt werden. Bevorzugt erfolgt in einer Ausgestaltung die Grobeinstellung durch eine formschlüssige Verbindung, beispielsweise Verzahnung, zwischen dem Teil der Kupplung und der Spindelmutter oder Spindel. Die eigentliche Justierung erfolgt nach erfolgter Grobeinstellung in der Justierstellung der Kupplung.

Die Erfindung betrifft ferner ein Personenbeförderungsfahrzeug mit einer Zustiegshilfe in einer der zuvor beschriebenen Ausgestaltungen.

Die Erfindung betrifft ferner ein Verfahren zur Montage und Justage einer Trittplatte einer Zustiegshilfe für ein Personenbeförderungsfahrzeug, wobei die Zustiegshilfe eine Antriebsvorrichtung zur Bewegung einer Trittplatte der Zustiegshilfe mittels eines Drehantriebs umfasst, und die Antriebsvorrichtung wenigstens einen Spindelmechanismus aufweist, der eine Spindel und eine Spindelmutter umfasst, wobei der Antriebsmechanismus ferner eine arretierbare und zur Justage der Trittplatte in einer Justierstellung lösbare Kupplung umfasst, die zwischen Trittplatte und Spindelmechanismus angeordnet ist, wobei das Verfahren Folgendes umfasst: einen Montegschritt, bei dem der Spindelmechanismus montiert wird, einen nachfolgenden Justierschritt, bei dem in der Justierstellung der Kupplung die Lage der Trittplatte justiert wird und einen nachfolgenden Arretierschritt, bei die Kupplung arretiert wird. In einer weiteren Ausgestaltung des erfindungsgemäßen Verfahrens ist ein dem Justierschritt vorgeschalteter Grobeinstellschritt vorgesehen, bei dem ein Teil der Kupplung mit dem Spindelmechanismus in vorgegebenen Stellungen festgelegt wird.

Im Folgenden wird anhand der beigefügten Zeichnungen ein Ausführungsbeispiel der erfindungsgemäßen Zustiegshilfe näher erläutert, ohne die Erfindung auf die gezeigten Beispiele einzuschränken.

In den Zeichnungen zeigen:
- **Fig. 1** in perspektivischer Darstellung eine Zustiegshilfe für ein Personenbeförderungsfahrzeug mit dem zugehörigen Halterahmen zur Befestigung am Fahrzeug;
- **Fig. 2** in perspektivischer Darstellung die Trittplatte mit Teilen der Antriebsvorrichtung;
- **Fig. 3** in Explosionsansicht den zugehörigen Spindelmechanismus mit Kupplung.

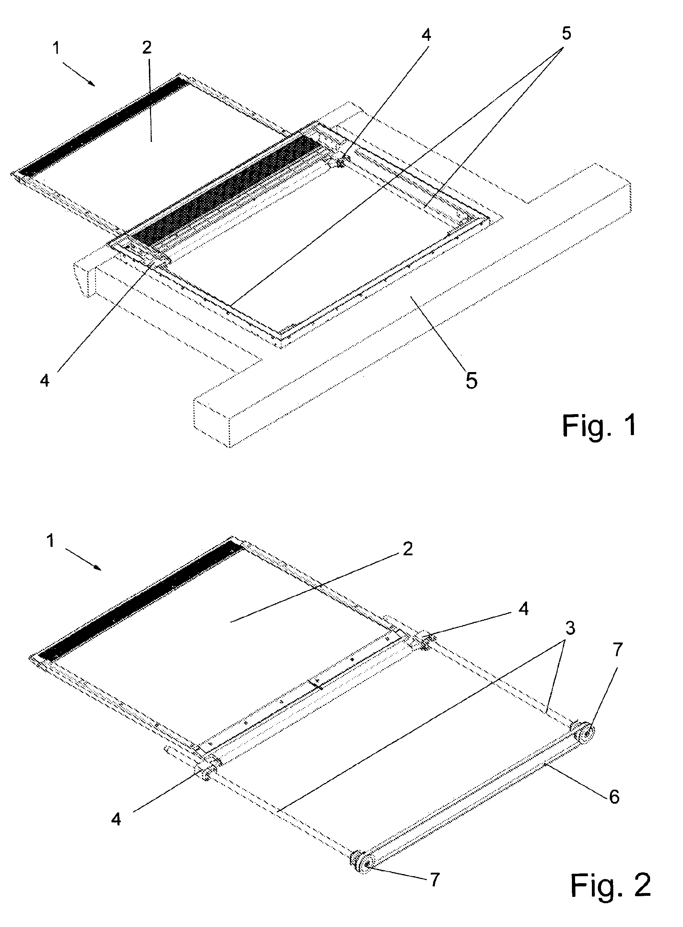

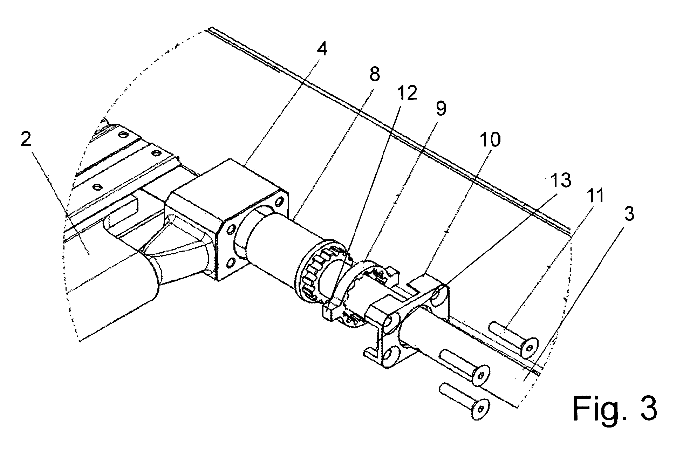

**Fig. 1** zeigt eine Ausgestaltung der erfindungsgemäßen Zustiegshilfe 1. Die Zustiegshilfe 1 umfasst eine ein- und ausfahrbare Trittplatte 2 (hier ohne Deckplatte und Bodenabdeckung dargestellt). Die Trittplatte 2 wird an einem Rahmen 5 des nicht näher dargestellten Fahrzeugs befestigt. Die Verschiebebewegung wird durch zwei spiegelbildlich aufgebaute und symmetrisch angeordnete Spindelmechanismen erreicht, die jeweils zwei angetriebene Spindeln 3 und in einem Gehäuse 4 aufgenommene und daher in Figur 1 und 2 nicht zu sehende Spindelmuttern 8 (siehe Figur 3) umfassen. Wird der nicht näher gezeigte Drehantrieb der Antriebsvorrichtung in Gang gesetzt, werden über den in Figur 2 gezeigten Zahnriemen 6 und die zugehörigen Zahnriemenscheiben 7 die beiden Spindeln 4 synchron in Drehung versetzt. Dabei bewegen sich die später im Einzelnen erläuterten Spindelmuttern 8 entlang der Spindeln 3 und bewirken so je nach Drehrichtung der Spindeln 3 ein Verfahren der Trittplatte 2 in Aus- beziehungsweise Einfahrrichtung. Dabei ist es unbedingt erforderlich, dass die Spindelmuttern 8 auf exakt "gleicher Höhe" verfahren, damit es nicht zu einem Verkanten der Trittplatte 2 kommt. Dies führt zu erhöhtem Verschleiß der Spindelmuttern 8 und/oder der Spindeln 3, bzw. im schlimmsten Fall zum Blockieren der Bewegung der Trittplatte 2.

Zur Justierung ist wenigstens eine der beiden Spindelmechanismen 3, 8 mit einer Kupplung 9, 10 versehen, die im Detail in Figur 3 zu erkennen ist. Die Kupplung 9, 10 ist zwischen der Trittplatte 2 beziehungsweise dem Gehäuse 4 und dem Spindelmechanismus 3, 8, hier der Spindelmutter 8, vorgesehen. Sie dient einerseits der Festlegung der Spindelmutter 8 gegenüber der Trittplatte 2 beziehungsweise dem Gehäuse 4 und weist dazu eine nachfolgend erläuterte Arretierstellung auf. Sie umfasst andererseits eine Justierstellung, bei der die Spindelmutter 8 nicht mit der Trittplatte 2 beziehungsweise dem Gehäuse 4 drehfest verbunden ist und gegenüber dem Trittbrett 2 beziehungsweise dem Gehäuse 4 zu dessen Justierung verdrehbar ist. Zur Grobeinstellung der Spindelmutter 8 ist ein Einstellring 9 vorgesehen, der bei der Montage auf die grob ausgerichtete Spindelmutter 8 aufgrund einer wechselseitigen Verzahnung in definierten Stellungen aufgesetzt werden kann und mit dieser drehbar zusammenwirkt. Der Einstellring 9 wird bei der weiteren Montage von einer Haube 10 übergriffen. Die Haube 10 wird mit dem Gehäuse 4 mittels Schrauben 11 verbunden. Bei gelösten Schrauben 11 befindet sich die Kupplung 9, 10 in der Justierstellung. Dabei kann über die Fortsätze 12, die über die Ausnehmungen 13 der Haube 10 zugänglich sind, die Verdrehung des Einstellrings 9 und damit der Spindelmutter 8 bezüglich des Gehäuses 4 und damit einer Justierung der Lage bzw. der Ausrichtung der Trittplatte 2 erreicht werden. Der Justierbereich ist dabei auf das Spiel der Fortsätze 12 in den Ausnehmungen 13 beschränkt. Mit Anziehen der Schrauben 11 wird die Arretierstellung der Kupplung 9, 10 erreicht, und es wird für eine kraftschlüssige und drehfeste Klemmung des Einstellrings 9 zwischen der Haube 10 und dem Gehäuse 4 gesorgt, was für eine Festlegung der Spindelmutter 8 gegenüber dem Trittbrett 2 sorgt. Neben einer reinen kraftschlüssigen Verbindung, wie beschrieben, kann auch eine formschlüssige Verbindung zwischen dem Einstellring 9 und der Haube 10 beziehungsweise dem Gehäuse 4 vorgesehen sein, um die Kupplung 9, 10 zu arretieren.

## Patentansprüche

1. Zustiegshilfe (1) für ein Personenbeförderungsfahrzeug mit einer Antriebsvorrichtung zur Bewegung einer Trittplatte (2) der Zustiegshilfe (1) mittels eines Drehantriebs, wobei die Antriebsvorrichtung wenigstens einen Spindelmechanismus (3, 8) aufweist, umfassend eine Spindel (3) und eine Spindelmutter (8), **dadurch gekennzeichnet, dass** der Antriebsmechanismus ferner eine arretierbare und zur Justage der Trittplatte in einer Justierstellung lösbare Kupplung (9, 10) umfasst, die zwischen Trittplatte (2) und Spindelmechanismus (3, 8) angeordnet ist.

2. Zustiegshilfe (1) gemäß dem vorhergehenden Anspruch, **dadurch gekennzeichnet, dass** der Antriebsmechanismus zwei Spindelmechanismen (3, 8) zur Bewegung der Trittplatte (2) umfasst und wenigstens eine Kupplung (9, 10) vorgesehen ist.

3. Zustiegshilfe (1) nach einem der vorhergehenden Ansprüche, **dadurch gekennzeichnet, dass** die Spindelmutter (8) des Spindelmechanismus (3, 8) mittels der Kupplung (9, 10) gegenüber der Trittplatte (2) arretierbar ist.

4. Zustiegshilfe (1) nach einem der vorhergehenden Ansprüche, **dadurch gekennzeichnet, dass** in der Justierstellung der Kupplung (9, 10) die Spindelmutter (8) oder die Spindel (3) gegenüber der Trittplatte (2) wenigstens in einem vorgegebenen Drehbereich (13) zur Justage verdrehbar ist.

5. Zustiegshilfe (1) nach einem der vorhergehenden Ansprüche, **dadurch gekennzeichnet, dass** zur Grobeinstellung wenigstens ein Teil der Kupplung (9) gegenüber der Spindelmutter (8) oder der Spindel (3) in definierten Stellungen festlegbar ist.

6. Zustiegshilfe (1) nach dem vorhergehenden Anspruch, **dadurch gekennzeichnet, dass** zur Grobeinstellung eine formschlüssige Verbindung, beispielsweise Verzahnung, zwischen dem Teil der Kupplung (9) und der Spindelmutter (8) oder der Spindel (3) vorgesehen ist.

7. Zustiegshilfe (1) nach einem der vorhergehenden Ansprüche, **dadurch gekennzeichnet, dass** die Arretierung der Kupplung durch eine kraftschlüssige Klemmung (4, 11, 13) oder eine formschlüssige Verbindung bewirkt wird.

8. Personenbeförderungsfahrzeug, **gekennzeichnet durch** eine Zustiegshilfe (1) nach einem der vorhergehenden Ansprüche.

## Claims

1. A boarding aid (1) for a passenger transport vehicle with a drive device for moving a step plate (2) of said boarding aid (1) by means of a rotary drive, said drive device comprising at least one spindle mechanism (3, 8), incorporating a spindle (3) and a spindle nut (8), **characterized in that** said drive mechanism further incorporates a coupling (9, 10) that may be immobilized and released for adjusting said step plate in a setting position, said coupling being interposed between said step plate (2) and said spindle mechanism (3, 8).

2. The boarding aid (1) as set forth in the previous claim, **characterized in that** the drive mechanism incorporates two spindle mechanisms (3, 8) for moving the step plate (2) and that there is provided at least one coupling (9, 10).

3. The boarding aid (1) as set forth In any one of the previous claims, **characterized in that** the spindle nut (8) of the spindle mechanism (3, 8) may be immobilized with respect to the step plate (2) by means of the coupling (9, 10).

4. The boarding aid (1) as set forth in any one of the previous claims, **characterized in that**, for setting, the spindle nut (8) or the spindle (3) may be rotated with respect to the step plate (2), at least in one given range of rotation (13) when the coupling (9, 10) is in the setting position.

5. The boarding aid (1) as set forth in any one of the previous claims, **characterized in that,** for rough setting, at least one part of the coupling (9) can be fixed in defined positions with respect to the spindle nut (8) or to the spindle (3).

6. The boarding aid (1) as set forth in the previous claim, **characterized in that**, for rough setting, a form-posltive connection such as a gearing is provided between the part of the coupling (9) and the spindle nut (8) or the spindle (3).

7. The boarding aid (1) as set forth in any one of the previous claims, **characterized in that** the immobilization of the coupling Is occasioned by a frictional clamp connection (4, 11, 13) or by a form-positive connection.

8. A passenger transport vehicle, **characterized by** a boarding aid (1) as set forth in any one of the previous claims.

## Revendications

1. Aide à la montée (1) pour un véhicule de transport de personnes avec un dispositif d'entraînement pour déplacer une planche de marchepied (2) de ladite aide à la montée (1) au moyen d'un mécanisme d'entraînement en rotation, ledit dispositif d'entraînement présentant au moins un mécanisme à broche (3, 8) comprenant une broche (3) et un écrou de broche (8), **caractérisée par le fait que** ledit mécanisme d'entraînement comprend en outre un accouplement (9, 10) qui est apte à être arrêté et à être désengagé dans une position d'ajustage pour ajuster la planche de marchepied et qui est disposé entre ladite planche de marchepied (2) et le mécanisme à broche (3, 8).

2. Aide à la montée (1) selon la revendication précédente, **caractérisée par le fait que** ledit mécanisme d'entraînement comprend deux mécanismes à broche (3, 8) pour déplacer la planche de marchepied (2) et que l'on prévoit au moins un accouplement (9, 10).

3. Aide à la montée (1) selon l'une quelconque des revendications précédentes, **caractérisée par le fait que** ledit écrou de broche (8) du mécanisme à broche (3, 8) peut être arrêté par rapport à la planche de marchepied (2) au moyen de l'accouplement (9, 10).

4. Aide à la montée (1) selon l'une quelconque des revendications précédentes, **caractérisée par le fait que**, dans la position d'ajustage de l'accouplement (9, 10), ledit écrou de broche (8) ou ladite broche (3) peut être tourné(e), pour l'ajustage, par rapport à la planche de marchepied (2) au moins dans une plage de rotation (13) prédéterminée.

5. Aide à la montée (1) selon l'une quelconque des revendications précédentes, **caractérisée par le fait que**, pour le réglage grossier, au moins une partie de l'accouplement (9) peut être immobilisée dans des positions définies par rapport à l'écrou de broche (8) ou à la broche (3).

6. Aide à la montée (1) selon la revendication précédente, **caractérisée par le fait que**, pour le réglage grossier, on prévoit une liaison à engagement positif, par exemple un engrenage, entre ladite partie de l'accouplement (9) et ledit écrou de broche (8) ou ladite broche (3).

7. Aide à la montée (1) selon l'une quelconque des revendications précédentes, **caractérisée par le fait que** l'arrêtage de l'accouplement est provoqué par un serrage entraîné par adhérence (4, 11, 13) ou par une liaison à engagement positif.

8. Véhicule de transport de personnes, **caractérisé par** une aide à la montée (1) selon l'une quelconque des revendications précédentes.
